# EUROPÄISCHE PATENTANMELDUNG

(11) **EP 4 575 432 A1**
(43) Veröffentlichungstag der Anmeldung: **25.06.2025**
(21) Anmeldenummer: 24215033.2
(22) Anmeldetag: 25.11.2024
(51) Int. Cl.: G01J 5/08, H04N 23/11, H04N 23/45, G01J 5/02, G01J 5/061, G01J 5/07, G01J 5/00

(54) **WÄRMEBILDKAMERA**

(30) Priorität: 22.12.2023 DE 102023213295
(71) Anmelder: Robert Bosch GmbH, 70442 Stuttgart (DE)
(72) Erfinder: Meyer, Patrick, 70771 Leinfelden-Echterdingen (DE); Saup, Tim, 70771 Leinfelden-Echterdingen (DE); Frank, Michael, 75015 Bretten (DE); Rumberg, Axel, 76199 Karlsruhe (DE)

(57) **Zusammenfassung**

Es wird eine Wärmebildkamera (100) mit einem Gehäuse (110), mit einer Fronthalterung (120), mit einer Infrarot-Baugruppe (140) zur Detektion von Infrarotstrahlung, mit einer visuellen Baugruppe (160) zur Aufnahme von visueller Strahlung, wobei die Infrarot-Baugruppe (140) und die visuelle Baugruppe (160) im Wesentlichen innerhalb des Gehäuses (110) angeordnet sind, und mit zumindest einem Kühlelement (180) zumindest zur Kühlung der Infrarot-Baugruppe (140), offenbart.

Es wird vorgeschlagen, dass die Wärmebildkamera (100) eine Anordenvorrichtung (200) aufweist, die dazu ausgebildet ist, die visuelle Baugruppe (160) zu der Infrarot-Baugruppe (140) anzuordnen.

## Beschreibung

Die vorliegende Erfindung betrifft eine Wärmebildkamera nach dem Oberbegriff des Anspruches 1.

### Stand der Technik

Aus der DE 10 2016 219 388 A1 ist bereits eine handgehaltene Wärmebildkamera zur kontaktfreien Ermittlung einer zweidimensionalen Temperaturinformation einer Szenerie bekannt, aufweisend ein Gehäuse mit zumindest einem Infrarot-Detektorarray, das aus einer Vielzahl von für Infrarotstrahlung empfindlichen Pixeln besteht.

### Offenbarung der Erfindung

Die vorliegende Erfindung geht aus von einer Wärmebildkamera mit einem Gehäuse, mit einer Fronthalterung, mit einer Infrarot-Baugruppe zur Detektion von Infrarotstrahlung, mit einer visuellen Baugruppe zur Aufnahme von visueller Strahlung, wobei die Infrarot-Baugruppe und die visuelle Baugruppe im Wesentlichen innerhalb des Gehäuses angeordnet sind, und mit zumindest einem Kühlelement zumindest zur Kühlung der Infrarot-Baugruppe. Es wird vorgeschlagen, dass die Wärmebildkamera eine Anordenvorrichtung aufweist, die dazu ausgebildet ist, die visuelle Baugruppe zu der Infrarot-Baugruppe anzuordnen.

Die Erfindung stellt eine Wärmebildkamera bereit, bei der thermische Einflüsse reduziert werden können, indem die Anordenvorrichtung die visuelle Baugruppe zu der Infrarot-Baugruppe anordnet.

"Wärmebildkamera" bezeichnet eine Vorrichtung zum kontaktfreien Vermessen einer zweidimensionalen Temperaturinformation einer Szenerie unter Ausgabe zumindest einer die zweidimensionale Temperaturinformation betreffenden Information, beispielsweise unter Ausgabe einer oder mehrerer Temperaturangaben, vorteilhaft zweier oder mehrerer Temperaturmesswerte, einer Temperaturverteilung oder dergleichen. In einer Ausführungsform der Wärmebildkamera kann diese zweidimensionale Temperaturinformation in Form eines aus einer Vielzahl von ortsaufgelösten und/oder raumwinkelaufgelösten Temperaturmesswerten zusammengesetzten Wärmebilds bestehen.

Die Wärmebildkamera kann als eine handgehaltene Wärmebildkamera ausgebildet sein. Unter der "handgehaltenen" Wärmebildkamera soll insbesondere verstanden werden, dass die Wärmebildkamera ohne Zuhilfenahme einer Transportmaschine lediglich mit Händen, insbesondere mit einer Hand, eines Benutzers transportiert werden kann. Insbesondere kann die Wärmebildkamera auch während eines Messvorgangs in einer von dem Benutzer der Wärmebildkamera frei ausgeführten Bewegung handgehalten durch einen Raum geführt werden. Die Masse der handgehaltenen Wärmebildkamera beträgt insbesondere weniger als 5 kg, vorteilhaft weniger als 3 kg und besonders vorteilhaft weniger als 1 kg.

Das Gehäuse kann als ein Schalengehäuse mit zwei Halbschalen ausgebildet sein. Das Gehäuse weist einen Handgriff oder einen Handgriffbereich auf, mit dem die Wärmebildkamera durch den Benutzer geführt werden kann. Das Gehäuse nimmt zumindest wesentlichen funktionalen Komponenten der Wärmebildkamera auf. So sind die Infrarot-Baugruppe und die visuelle Baugruppe im Wesentlichen innerhalb des Gehäuses angeordnet. Weiter können die Fronhalterung, das Kühlelement und/oder die Anordenvorrichtung im Wesentlichen innerhalb des Gehäuses angeordnet sein. Weiter nimmt das Gehäuse zumindest eine Steuereinheit, eine Eingabe- und/oder eine Ausgabevorrichtung, insbesondere eine Anzeigevorrichtung, eine Energieversorgungseinheit sowie eine Auswerteeinheit auf. Die Wärmebildkamera kann zumindest ein Bedienelement aufweisen, das dazu ausgebildet ist, die Wärmebildkamera zu bedienen. Weiter kann das Gehäuse zumindest eine Eintrittsöffnung aufweisen, in die die visuelle Strahlung und/oder Infrarotstrahlung eintreten kann.

Die Fronthalterung kann durch das Gehäuse aufgenommen sein. Dabei kann die Fronthalterung das Gehäuse gegenüber einer Umgebung abschließen. Die funktionalen Komponenten der Wärmebildkamera können innerhalb des Gehäuses im Wesentlichen vor Umwelteinflüssen geschützt werden. Die Fronthalterung weist eine Öffnung für die Infrarot-Baugruppe und die visuelle Baugruppe auf. Die Fronthalterung weist eine Aufnahme für die visuelle Baugruppe auf. Die Aufnahme für die visuelle Baugruppe ist dazu ausgebildet, die visuelle Baugruppe zumindest teilweise zu umgreifen. Die visuelle Baugruppe kann mittels einer Stirnfläche an der Aufnahme der Fronthalterung anliegen. Es ist möglich, dass die visuelle Baugruppe mittels einer visuellen Optik an der Fronthalterung, insbesondere der Aufnahme der Fronthalterung, anliegt. Die Fronthalterung kann beispielsweise aus einem wärmeleitenden Material, wie beispielsweise Aluminium, hergestellt sein.

Die visuelle Baugruppe umfasst zumindest eine visuelle Kamera zur Aufnahme von zumindest einem Bild und/oder einem Video im visuellen Spektrum der Strahlung, eine Optik für die visuelle Kamera und eine Platine für die visuelle Kamera. Die visuelle Baugruppe, insbesondere die Platine für die visuelle Kamera, ist signaltechnisch mit der Steuereinheit verbunden. Die Optik für die visuelle Kamera ist dazu ausgebildet, die visuelle Strahlung zu brechen, zu bündeln und/oder zu fokussieren und an die visuelle Kamera zu leiten.

Zudem weist die Fronthalterung eine weitere Aufnahme auf. Die weitere Aufnahme der Fronthalterung kann eine Klebeschicht bzw. ein Klebepad aufweisen. Die weitere Aufnahme der Fronthalterung ist dazu ausgebildet, zumindest ein Infrarot-Fenster und/oder eine Glasscheibe für die visuelle Baugruppe aufzunehmen. Weiter ist es möglich, dass die weitere Aufnahme der Fronthalterung beispielsweise einen Laser und eine Linse für eine Lichtquelle, wie beispielsweise eine LED, aufnimmt. Weiter kann eine Dichtung auf die Fronthalterung aufgebracht und/oder aufgeklebt werden.

Die Infrarot-Baugruppe kann ein Infrarot-Gehäuse, einen Infrarot-Sensor, eine Infrarot-Optik und/oder eine Infrarot-Platine aufweisen. Das Infrarot-Gehäuse ist dazu ausgebildet, die Infrarot-Optik relativ zu dem Infrarot-Sensor anzuordnen. Der Infrarot-Sensor kann als ein Infrarot-Detektorarray ausgebildet sein. Denkbar ist auch, dass der Infrarot-Sensor als ein, insbesondere Mikro-, Bolometer ausgebildet ist. Zum Messen von Infrarotstrahlung weist die Wärmebildkamera die Infrarot-Baugruppe sowie die Auswerteeinheit auf. Der Infrarot-Sensor weist eine Vielzahl von für Infrarotstrahlung empfindlichen Pixeln auf. Der Infrarot-Sensor erfasst in einem Raumwinkelbereich abgestrahlte und auf dessen Oberfläche projizierte Infrarotstrahlung und erzeugt basierend auf einer detektierten Intensität einfallender Infrarotstrahlung ein Detektionssignal. Der Infrarot-Sensor weist an einer der Szenerie zugewandten Oberfläche eine zweidimensionale Detektionsfläche auf, auf der die Vielzahl für Infrarotstrahlung empfindlicher Pixel angeordnet ist. Jedes der Pixel des Infrarot-Detektorarrays kann dabei - Beleuchtung mittels Infrarotstrahlung vorausgesetzt - eine Bildinformation ermitteln und daraus ein Detektionssignal erzeugen. Das von jedem Pixel bereitgestellte Detektionssignal kann anschließend zur Bestimmung einer Temperaturinformation herangezogen werden. Insbesondere kann das Detektionssignal eines jeden Pixels an die Auswerteeinheit der Wärmebildkamera weitergeleitet werden. Von der Auswerteeinheit kann das Detektionssignal einzeln und/oder in Kombination mit Detektionssignalen anderer Pixel ausgewertet werden. Die Infrarot-Optik ist dazu ausgebildet, die Infrarotstrahlung zu brechen, zu bündeln und/oder zu fokussieren und auf den Infrarot-Sensor zu leiten. Der Infrarot-Sensor kann auf der Infrarot-Platine angeordnet sein. So kann der Infrarot-Sensor zwischen der Infrarot-Platine und der Infrarot-Optik angeordnet sein. Die Infrarot-Platine ist signaltechnisch mit der Steuereinheit und/oder der Auswerteeinheit verbunden, sodass das Detektionssignal von der Infrarot-Baugruppe zu der Steuereinheit und/oder Auswerteeinheit leitbar ist. Die Infrarot-Baugruppe kann zumindest teilweise in eine Ausnehmung der Fronthalterung eingreifen. Dabei kann die Infrarot-Baugruppe in die Ausnehmung mittels der Infrarot-Optik eingreifen. Die Infrarot-Baugruppe kann eine optische Achse festlegen, die eine Haupteinfallsrichtung der Infrarotstrahlung sein kann. Insbesondere soll als "axial" im Wesentlichen parallel zur optischen Achse verstanden werden. Wohingegen als "radial" im Wesentlichen senkrecht zur optischen Achse verstanden werden soll.

Die Wärmebildkamera weist die Steuereinheit zumindest zur Steuerung der Infrarot-Baugruppe und/oder der visuellen Baugruppe auf. Die Steuereinheit ist hierzu signaltechnisch mit zumindest der Infrarot-Baugruppe und der visuellen Baugruppe verbunden. Weiter ist die Steuereinheit signaltechnisch mit der Auswerteeinheit verbunden. Beispielsweise kann die Steuereinheit in einem Handgriff der Handwerkzeugmaschine, in einem Bereich einer Energieversorgungsschnittstelle oder in einem Bereich der Infrarot-Baugruppe und/oder der visuellen Baugruppe angeordnet sein. Die Steuereinheit weist zumindest eine Hauptplatine auf. Die Hauptplatine kann gegenüberliegend zu der Fronthalterung angeordnet sein. Beispielsweise kann die Hauptplatine in Richtung zu der Ausgabevorrichtung angeordnet sein.

Unter der "Auswerteeinheit" der Wärmebildkamera soll eine Einheit verstanden werden, die zumindest einen Informationseingang zur Annahme von Detektionssignalen, eine Informationsverarbeitungseinheit zur Bearbeitung, insbesondere Auswertung der angenommenen Detektionssignale, sowie eine Informationsausgabe zur Weitergabe der bearbeiteten und/oder ausgewerteten Detektionssignale und/oder Auswerteinformationen aufweist. Vorteilhaft weist die Auswerteeinheit Komponenten auf, die zumindest einen Prozessor, einen Speicher und ein Betriebsprogramm mit Auswerte- und Berechnungsroutinen umfassen. Insbesondere können die elektronischen Bauteile der Auswerteeinheit auf einer Platine oder Leiterplatte angeordnet sein, bevorzugt auf einer gemeinsamen Platine mit der Steuereinheit der Wärmebildkamera zur Steuerung der Wärmebildkamera. Des Weiteren können die Steuereinheit und die Auswerteeinheit auch als ein einzelnes Bauteil ausgeführt sein, beispielsweise in Form eines Mikrokontrollers. Die Auswerteeinheit ist dazu vorgesehen, von dem Infrarot-Detektorarray erzeugte Detektionssignale, insbesondere von den mit der Auswerteeinheit signaltechnisch verbindbaren Pixeln, zu empfangen, auszuwerten und basierend auf Detektionssignalen zumindest einer Mehrzahl beleuchteter Pixel des Infrarot-Detektorarrays eine Auswertung der zweidimensionalen Temperaturinformation der Szenerie durchzuführen. Bevorzugt ist die Auswerteeinheit dazu vorgesehen, basierend auf den Detektionssignalen zumindest einer Mehrzahl beleuchteter Pixel, eine Auswertung eines oder mehrerer Temperaturmesswerte, insbesondere auch gemittelter Temperaturmesswerte, besonders bevorzugt eines Wärmebilds durchzuführen. Auf diese Weise dient die Auswerteeinheit der Ermittlung der zweidimensionalen Temperaturinformation, insbesondere des Wärmebildes, aus gemessener Infrarotstrahlung. Die ausgewertete zweidimensionale Temperaturinformation, insbesondere das Wärmebild, kann von der Auswerteeinheit zur weiteren Verarbeitung und/oder Ausgabe dem Benutzer der Wärmebildkamera mittels der Ausgabevorrichtung und/oder einem externen Gerät mittels einer Datenkommunikationsschnittstelle bereitgestellt werden.

Die Ausgabevorrichtung ist dazu ausgebildet, die zweidimensionale Temperaturinformation, insbesondere das Wärmebild, darzustellen, Informationen dem Benutzer bereitzustellen und anzuzeigen. Die Ausgabevorrichtung kann beispielsweise als ein Display ausgebildet sein. Die Ausgabevorrichtung kann gegenüberliegend zu der Fronthalterung an dem Gehäuse angeordnet sein. Die Ausgabevorrichtung kann beispielsweise die Bilder bzw. die Videos der visuellen Baugruppe wiedergeben und/oder das Detektionssignal der Infrarot-Baugruppe.

Die Eingabevorrichtung ist dazu ausgebildet, Eingabe des Benutzers zu empfangen und zumindest an die Steuereinheit weiterzuleiten. Die Eingabevorrichtung kann zumindest ein Bedienelement aufweisen. Das Bedienelement kann beispielsweise dazu ausgebildet sein, die Wärmebildkamera ein- und/oder auszuschalten, eine Fotoaufnahme einer Szenerie zu tätigen, einen Betriebsmodus einzustellen oder eine sonstige Funktion der Wärmebildkamera zu aktivieren.

Das Kühlelement ist dazu ausgebildet, zumindest die Infrarot-Baugruppe zu kühlen. Dabei kann das Kühlelement gegenüberliegend zur Fronthalterung, insbesondere im Wesentlichen innerhalb des Gehäuses, angeordnet sein. Das Kühlelement kann axial entlang der optischen Achse zwischen der Fronthalterung und der Ausgabevorrichtung angeordnet sein. Das Kühlerelement ist aus einem wärmeleitenden Material hergestellt. Das Kühlelement nimmt Wärme von zumindest der visuellen Baugruppe und der Infrarot-Baugruppe auf und leitet sie ab, um thermische Störeinflüsse zu reduzieren, insbesondere zu minimieren.

Die Anordenvorrichtung ordnet die visuelle Baugruppe mechanisch zu der Infrarot-Baugruppe an. Beispielhaft kann die Anordenvorrichtung als eine Art Rahmen, Schale oder Topf ausgebildet sein. Die Anordenvorrichtung kann um die optische Achse ausgeformt sein. Zudem ist die Anordenvorrichtung dazu ausgebildet, die Infrarot-Baugruppe thermisch von der visuellen Baugruppe zu isolieren. Weiter ist die Anordenvorrichtung dazu ausgebildet, Störstrahlung auf die Infrarot-Baugruppe zu reduzieren. Die Anordenvorrichtung ist im Wesentlichen aus einem nicht-wärmeleitend, also wärmeisolierend, Material hergestellt. Dabei kann die Anordenvorrichtung das Kühlelement thermisch von der Fronthalterung entkoppeln.

Die Energieversorgungseinheit ist für einen Batteriebetrieb mittels Batterien, für einen Akkubetrieb mittels Akkus, insbesondere Handwerkzeugmaschinenakkupacks, und/oder für einen Netzbetrieb vorgesehen ist. Die Energieversorgungseinheit ist zumindest zur Energieversorgung der Wärmebildkamera vorgesehen. In einer bevorzugten Ausführungsform ist die Energieversorgung für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Lilon-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Handwerkzeugmaschine als auch der Betrieb als netzbetriebene Handwerkzeugmaschine sind dem Fachmann hinreichend bekannt, weshalb hier nicht auf die Einzelheiten der Energieversorgung eingegangen wird.

In einer Ausführungsform der Wärmebildkamera ist die Anordenvorrichtung, insbesondere axial entlang der optischen Achse, zwischen der Fronthalterung und dem Kühlelement angeordnet. Zumindest die Infrarot-Baugruppe liegt mittels der Infrarot-Platine an dem Kühlelement an. Das Kühlelement weist eine Aufnahme für die Infrarot-Baugruppe auf. Die Aufnahme des Kühlelements ist dazu ausgebildet, die Infrarot-Baugruppe zumindest teilweise aufzunehmen. Die Anordenvorrichtung liegt zumindest teilweise und/oder zumindest abschnittsweise an dem Kühlelement und/oder der Fronthalterung an. Das Kühlelement kann zumindest teilweise in die Anordenvorrichtung eingreifen.

In einer Ausführungsform der Wärmebildkamera sind die Infrarot-Baugruppe und die visuelle Baugruppe mittels der Anordenvorrichtung überlappend zueinander angeordnet. Dabei können die Infrarot-Baugruppe und die visuelle Baugruppe axial relativ zu der optischen Achse überlappen. Beispielsweise überlappen zumindest die Infrarot-Optik und die Platine für die visuelle Kamera. Die Infrarot-Baugruppe und die visuelle Baugruppe können radial, insbesondere zur optischen Achse, beabstandet zueinander angeordnet sein.

In einer Ausführungsform der Wärmebildkamera weist die Anordenvorrichtung zumindest eine Aufnahme für die Infrarot-Baugruppe auf, die die Infrarot-Baugruppe zumindest teilweise umgreift. Die Aufnahme der Anordenvorrichtung für die Infrarot-Baugruppe kann beispielsweise als eine Öffnung oder eine Ausnehmung ausgebildet sein. Dabei kann die Aufnahme der Anordenvorrichtung für die Infrarot-Baugruppe beispielsweise rund, elliptisch oder mehreckig, wie dreieckig oder viereckig, ausgebildet sein. Die Aufnahme der Anordenvorrichtung für die Infrarot-Baugruppe kann das Infrarot-Gehäuse zumindest teilweise umgreifen. Das Infrarot-Gehäuse kann an der Aufnahme der Anordenvorrichtung für die Infrarot-Baugruppe anliegen oder beabstandet sein. Die Aufnahme kann zumindest zwei Stege, die gegenüberliegend zueinander angeordnet sind, aufweisen. Beispielhaft können vier aneinander anstoßende Stege vorgesehen sein, die an dem Infrarot-Gehäuse anliegen. Beispielhaft umgreift die Aufnahme der Anordenvorrichtung für die Infrarot-Baugruppe das Infrarot-Gehäuse im Wesentlichen vollständig. Die Aufnahme der Anordenvorrichtung für die Infrarot-Baugruppe kann das Infrarot-Gehäuse relativ zu der visuellen Baugruppe festlegen.

In einer Ausführungsform der Wärmebildkamera weist die Anordenvorrichtung eine Aufnahme für die visuelle Baugruppe auf, die die visuelle Baugruppe zumindest teilweise umgreift. Die Aufnahme der Anordenvorrichtung für die visuelle Baugruppe kann die visuelle Baugruppe zumindest teilweise aufnehmen. Dabei kann die visuelle Baugruppe nur teilweise an der Aufnahme der Anordenvorrichtung für die visuelle Baugruppe anliegen. Die Aufnahme der Anordenvorrichtung für die visuelle Baugruppe kann die Platine für die visuelle Kamera zumindest teilweise umgreifen. Die Aufnahme der Anordenvorrichtung für die Infrarot-Baugruppe und die Aufnahme der Anordenvorrichtung für die visuelle Baugruppe können radial, insbesondere zur optischen Achse, versetzt zueinander an der Anordenvorrichtung ausgebildet sein. Entsprechend können die Infrarot- Baugruppe und die visuelle Baugruppe radial zueinander angeordnet sein. Die Aufnahme der Anordenvorrichtung für die visuelle Baugruppe kann beispielsweise schalenartig, topfartig, rahmenartig oder regalartig ausgebildet sein. Die Aufnahme der Anordenvorrichtung für die visuelle Baugruppe kann zumindest ein Anlageelemente aufweisen, das zwischen der Platine der visuellen Kamera angeordnet ist und zumindest teilweise daran anliegt. Das Anlageelement kann beispielsweise als Stege ausgebildet sein.

In einer Ausführungsform der Wärmebildkamera weist die Anordenvorrichtung zumindest ein Abschirmelement auf, das dazu ausgebildet ist, Wärmestrahlung von der visuellen Baugruppe gegenüber der Infrarot-Baugruppe abzuschirmen. Das Abschirmelement kann mit der Anordenvorrichtung verbunden sein. Die Anordenvorrichtung kann das Abschirmelement ausbilden. Es ist möglich, dass das Abschirmelement und die Anordenvorrichtung einstückig sind. Das Abschirmelement kann sich axial entlang der optischen Achse erstrecken. Beispielsweise kann hier das Abschirmelement in Richtung der Fronthalterung und weg von der Infrarot-Baugruppe angeordnet sein. Das Abschirmelement kann beispielsweise nach Art eines Stegs, eines Vorsprungs oder einer Kante ausgebildet sein.

In einer Ausführungsform der Wärmebildkamera weist die Fronthalterung zumindest ein Isolierelement auf, das dazu ausgebildet ist, die Infrarot-Baugruppe zu isolieren. Das Isolierelement kann mit der Fronthalterung verbunden sein. Es ist möglich, dass die Fronthalterung das Isolierelement ausbildet, sodass diese einstückig sind. Das Isolierelement kann sich axial entlang der optischen Achse erstrecken. Dabei kann sich das Isolierelement in Richtung zu der Infrarot-Baugruppe erstrecken. Das Isolierelement kann beispielsweise nach Art eines Stegs, eines Vorsprungs oder einer Kante ausgebildet sein. Das Isolierelement kann thermische Strahlung von der visuellen Baugruppe in Richtung zu der Infrarot-Baugruppe verhindern und/oder reduzieren.

In einer Ausführungsform der Wärmebildkamera liegt das Abschirmelement an dem Isolierelement an. In einem montieren Zustand der Wärmebildkamera kann das Abschirmelement an dem Isolierelement anliegen. Hierdurch können das Abschirmelement und das Isolierelement einen gemeinsamen Steg ausbilden, der die Infrarot-Baugruppe gegenüber thermischer Strahlung von der visuellen Baugruppe im Wesentlichen abschirmt.

In einer Ausführungsform der Wärmebildkamera weist die Anordenvorrichtung zumindest ein Anordenelement auf, das dazu ausgebildet ist, die Fronthalterung relativ zu der Infrarot-Baugruppe und/oder der visuellen Baugruppe anzuordnen. Die Anordenvorichtung kann mit dem Anordenelement verbunden sein. Die Anordenvorrichtung kann das Anordenelement ausbilden, sodass diese einstückig sein können. Das Anordenelement richtet die Fronthalterung relativ zu der Infrarot-Baugruppe und/oder der visuellen Baugruppe derart aus, dass Öffnungen in der Fronthalterung axial zu jeweils der Infrarot-Baugruppe und/oder der visuellen Baugruppe ausgerichtet sind. Das Anordenelement kann beispielsweise hülsenartig, zylindrisch, stegartig oder nach Art eines Schraubdoms ausgebildet sein. Das Anordenelement kann in die Fronthalterung eingreifen. Die Fronthalterung kann hierfür eine Aufnahme aufweisen, wobei das Anordenelement zumindest formschlüssig in die Aufnahme eingreifen kann. Es kann eine Mehrzahl an Anordenelementen vorgesehen sein, wie beispielsweise zwei, drei, vier oder mehr als vier.

In einer Ausführungsform der Wärmebildkamera weist das Kühlelement zumindest ein Ausrichtungselement auf und die Anordenvorrichtung umfasst zumindest eine Aufnahme für das Ausrichtungselement, wobei das Ausrichtungselement dazu ausgebildet ist, die Anordenvorrichtung mittels der Aufnahme für das Ausrichtungselement relativ zu dem Kühlelement auszurichten. Das Ausrichtungselement kann mit dem Kühlelement verbunden sein. Das Kühlelement kann das Ausrichtungselement ausbilden, sodass diese einstückig sind. Das Ausrichtungselement kann in die Aufnahme der Anordenvorrichtung für das Ausrichtelement zumindest formschlüssig eingreifen. Das Ausrichtungselement kann beispielsweise als ein Zapfen, Stift, ein Bolzen, ein Vorsprung oder ein Steg ausgebildet sein. Es kann eine Mehrzahl an Ausrichtungselementen vorgesehen sein, beispielsweise, zwei, drei oder mehr als drei.

### Kurze Beschreibung der Zeichnungen

Die Erfindung wird nachfolgend anhand von einer bevorzugten Ausführungsform erläutert. Die Zeichnungen im Folgenden zeigen:
Fig. 1a eine schematische Frontansicht einer erfindungsgemäßen Wärmebildkamera;
Fig. 1b eine schematische Rückansicht einer erfindungsgemäßen Wärmebildkamera;
Fig. 2 einen Ausschnitt eines Längsschnitts der Wärmebildkamera;
Fig. 3 eine Explosionsansicht einer Fronthalterung, einer Anordenvorrichtung, eines Kühlelements, einer Infrarot-Baugruppe und einer visuellen Baugruppe;
Fig. 4a eine perspektivische Frontansicht der Anordenvorrichtung;
Fig. 4b eine perspektivische Rückansicht der Anordenvorrichtung;

### Beschreibung des Ausführungsbeispiels

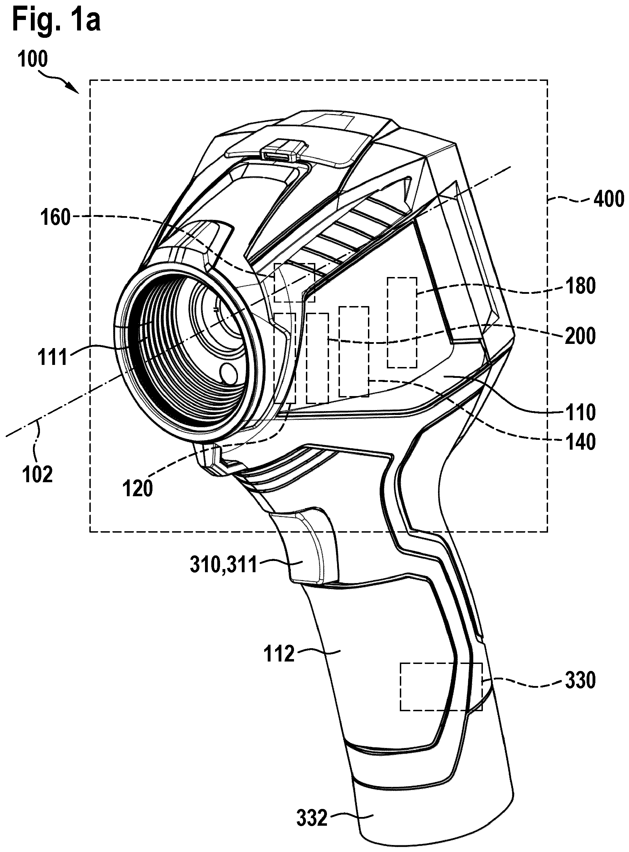

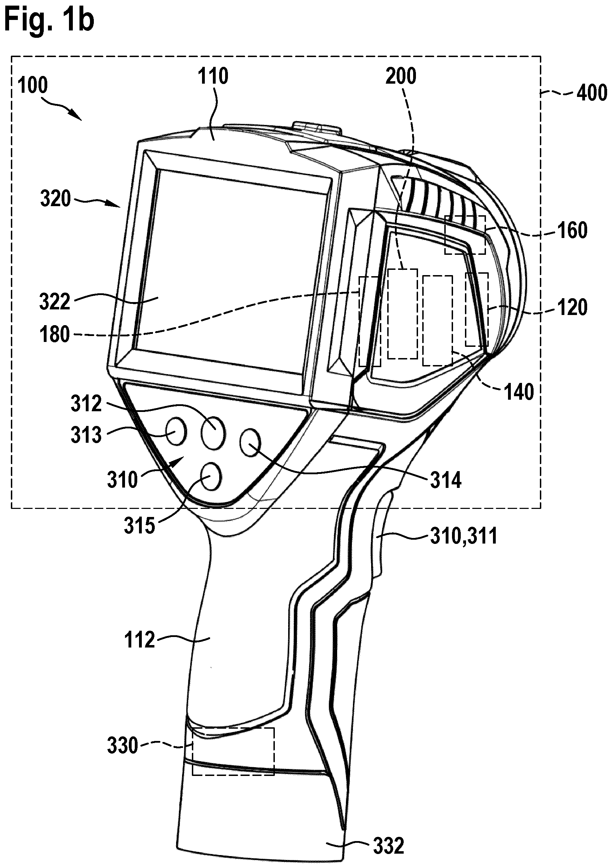

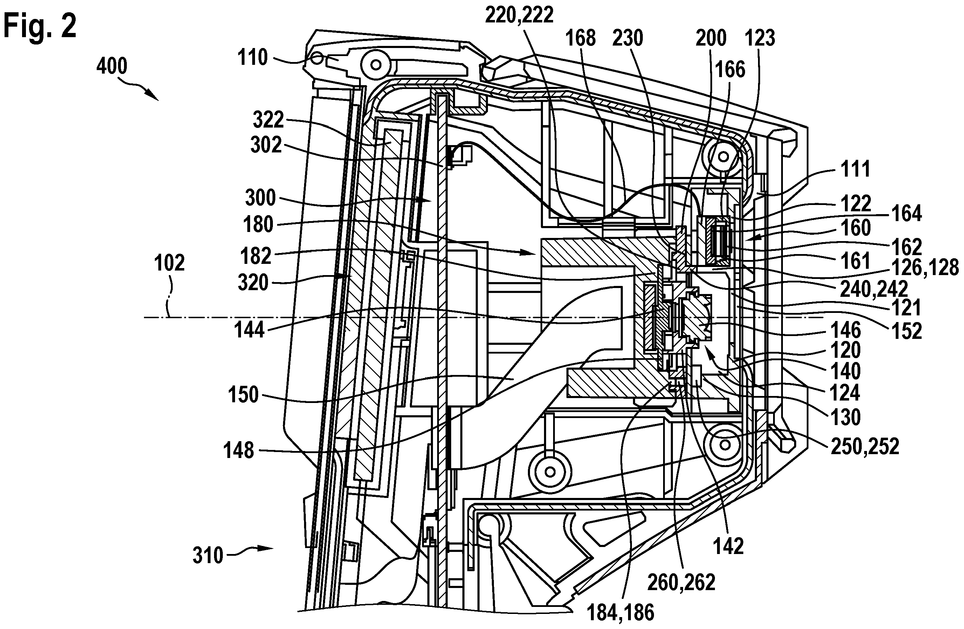

Fig. 1a zeigt eine schematische Frontansicht einer erfindungsgemäßen Wärmebildkamera 100, wobei Fig. 1b eine schematische Rückansicht der Wärmebildkamera 100 darstellt. Die Wärmebildkamera 100 ist hier beispielhaft als eine handgehaltene Wärmebildkamera 100 ausgeformt. Die Wärmebildkamera 100 umfasst ein Gehäuse 110, eine Fronthalterung 120, eine Infrarot-Baugruppe 140 zur Detektion von Infrarotstrahlung, eine visuelle Baugruppe 160 zur Aufnahme von visueller Strahlung und zumindest ein Kühlelement zumindest 180 zur Kühlung der Infrarot-Baugruppe 140, siehe auch Fig. 2 bis 4. Die Infrarot-Baugruppe 140 und die visuelle Baugruppe 160 sind im Wesentlichen innerhalb des Gehäuses 110 angeordnet. Die Wärmebildkamera 100 umfasst eine Anordenvorrichtung 200, siehe auch Fig. 2 bis 4. Die Anordenvorrichtung 200 ist dazu vorgesehen, die visuelle Baugruppe 160 zu der Infrarot-Baugruppe 140 anzuordnen.

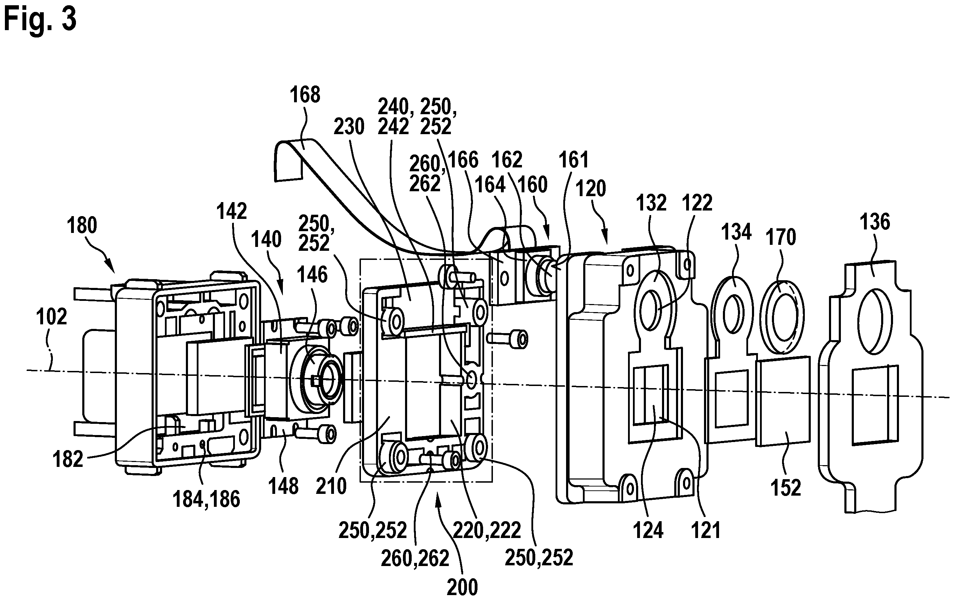

Das Gehäuse 110 ist als ein Schalengehäuse mit zwei Halbschalen ausgeformt. Das Gehäuse 110 umfasst einen Handgriff 112. Die Fronhalterung 120, das Kühlelement 180 und die Anordenvorrichtung 200 sind im Wesentlichen innerhalb des Gehäuses 110 angeordnet, siehe auch Fig. 2 und 3. Das Gehäuse 110 nimmt eine Steuereinheit 300, eine Eingabevorrichtung 310, eine Ausgabevorrichtung 320, eine Energieversorgungseinheit 330 und eine nicht dargestellte Auswerteeinheit auf. Die Eingabevorrichtung 310 umfasst beispielsweise fünf Bedienelemente 311, 312, 313, 314, 315, siehe auch Fig. 1b. Die fünf Bedienelemente 311, 312, 313, 314, 315 sind dazu vorgesehen, die Wärmebildkamera 100 zu bedienen. Ein erstes Bedienelement 311 ist als ein Trigger ausgebildet, mittels dem Bilder aufgenommen werden können. Ein zweites Bedienelement 312 ist als ein Knopf ausgebildet, mittels dem ein Benutzer die Wärmebildkamera 100 ein- und ausschalten und ein Menüauswahl aufrufen kann. Ein drittes Bedienelement 313 und ein viertes Bedienelement 314 sind dazu ausgebildet, innerhalb der Menüauswahl zwischen Betriebsmodi durchzuschalten. Ein fünftes Bedienelement 315 ist dazu ausgebildet, einen gewünschten Betriebsmodi zu bestätigen und zu aktivieren. Belegungen der Bedienelemente 311, 312, 313, 314, 315 sind hier beispielhaft genannt, sodass dem Fachmann klar ist, dass die Belegungen auch andersartig sein können. Die Ausgabevorrichtung 320 ist dazu vorgesehen, eine zweidimensionale Temperaturinformation, insbesondere ein Wärmebild, darzustellen, Informationen dem Benutzer bereitzustellen und anzuzeigen. Die Ausgabevorrichtung 320 ist beispielhaft als ein Display 322 ausgeformt, siehe Fig. 1b. Die Ausgabevorrichtung 320 ist gegenüberliegend zu der Fronthalterung 120 an dem Gehäuse 110 angeordnet. Die Energieversorgungseinheit 330 ist für einen Akkubetrieb mittels eines Handwerkzeugmaschinenackupacks 332 ausgebildet. Die Energieversorgungseinheit 330 ist zumindest zur Energieversorgung der Wärmebildkamera 100 ausgebildet. Das Gehäuse umfasst eine Eintrittsöffnung 111. In die Eintrittsöffnung 111 kann die visuelle Strahlung und/oder Infrarotstrahlung eintreten. Die Infrarot-Baugruppe 140 legt eine optische Achse 102 fest, die eine Haupteinfallsrichtung der Infrarotstrahlung und/oder der visuellen Strahlung durch die Eintrittsöffnung 111 ist.

Fig. 2 zeigt einen Ausschnitt 400 eines Längsschnitts der Wärmebildkamera 100. Das Kühlelement 180 ist dazu ausgeformt, zumindest die Infrarot-Baugruppe 140 zu kühlen, wobei es aus einem wärmeleitenden Material hergestellt ist. Das Kühlelement 180 ist gegenüberliegend zur Fronthalterung 120 angeordnet. Das Kühlelement 180 ist axial entlang der optischen Achse 102 zwischen der Fronthalterung 120 und der Ausgabevorrichtung 300 angeordnet. Das Gehäuse 110 nimmt die Fronthalterung 120 auf. Die Fronthalterung 120 umfasst eine Öffnung 121 für die Infrarot-Baugruppe und eine Öffnung 122 für die visuelle Baugruppe 160. Die Fronthalterung 120 umfasst eine Aufnahme 123 für die visuelle Baugruppe 160. Die Aufnahme 123 für die visuelle Baugruppe 160 umgreift die visuelle Baugruppe 160 zumindest teilweise. Die visuelle Baugruppe 160 liegt mittels einer Stirnfläche 161 an der Aufnahme 123 der Fronthalterung 120 an. Die visuelle Baugruppe 160 liegt mittels einer visuellen Optik 162 an der Fronthalterung 120 an. Die visuelle Baugruppe 160 weist eine visuelle Kamera 164 zur Aufnahme von zumindest einem Bild und/oder einem Video im visuellen Spektrum der Strahlung, die Optik 162 für die visuelle Kamera 164 und eine Platine 166 für die visuelle Kamera 164 auf. Die visuelle Baugruppe 160, insbesondere die Platine 166 für die visuelle Kamera 164, ist signaltechnisch mittels eines Kabels 168 mit der Steuereinheit 300 verbunden.

Die Infrarot-Baugruppe 140 umfasst ein Infrarot-Gehäuse 142, einen Infrarot-Sensor 144, eine Infrarot-Optik 146, eine Infrarot-Platine 148 und ein Verbindungskabel 150. Das Infrarot-Gehäuse 142 ordnet die Infrarot-Optik 146 relativ zu dem Infrarot-Sensor 144 an. Der Infrarot-Sensor 144 ist als ein Infrarot-Detektorarray ausgeformt. Zum Messen von Infrarotstrahlung umfasst die Wärmebildkamera 100 die Infrarot-Baugruppe 140 sowie die Auswerteeinheit. Die Infrarot-Baugruppe 140 ist mittels des Verbindungskabels 150 mit der Auswerteeinheit verbunden, wobei hier die Steuereinheit 300 die Auswerteeinheit aufweist. Die Infrarot-Optik 146 bündelt durch die Eintrittsöffnung 111 einfallende Infrarotstrahlung und leitet diese an den Infrarot-Sensor 144 weiter. Der Infrarot-Sensor 144 ist auf der Infrarot-Platine 148 angeordnet, wobei der Infrarot-Sensor 144 zwischen der Infrarot-Platine 148 und der Infrarot-Optik 146 angeordnet ist. Die Infrarot-Platine 148 ist mittels des Verbindungskabels 150 mit der Steuereinheit 300 verbunden. Die Infrarot-Baugruppe 140 greift zumindest teilweise in eine Ausnehmung 124 der Fronthalterung 120 ein, wobei die Infrarot-Baugruppe 140 mittels der Infrarot-Optik 146 in die Ausnehmung 124 eingreift.

Die Steuereinheit 300 ist signaltechnisch mittels des Verbindungskabels 150 mit der Infrarot-Baugruppe 140 und mittels des Kabels 168 mit der visuellen Baugruppe 160 verbunden. Die Steuereinheit 300 umfasst eine Hauptplatine 302, die gegenüberliegend zu der Fronthalterung 120 angeordnet ist. Die Hauptplatine 302 ist, insbesondere axial zur optischen Achse 102, zwischen der Fronthalterung 120 und der Ausgabevorrichtung 320 angeordnet. Zudem ist die Hauptplatine 302 axial, insbesondere zur optischen Achse 102, zwischen dem Kühlelement 180 und der Ausgabevorrichtung 320 angeordnet.

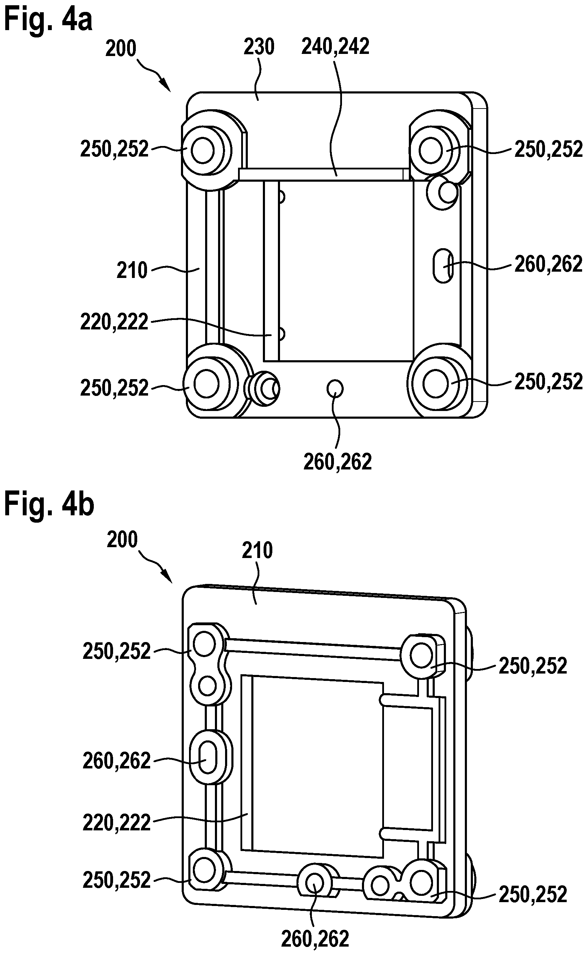

Die Anordenvorrichtung 200 ist dazu ausgeformt, die visuelle Baugruppe 160 mechanisch zu der Infrarot-Baugruppe 140 anzuordnen. Die Anordenvorrichtung 200 ist beispielhaft als ein Rahmen 210 ausgeformt, siehe auch Fig. 3 bis 4. Die Anordenvorrichtung 200 ist um die optische Achse 102 angeordnet und isoliert die Infrarot-Baugruppe 140 thermisch von der visuellen Baugruppe 160. Die Anordenvorrichtung 200 entkoppelt das Kühlelement 180 thermisch von der Fronthalterung 120. Die Anordenvorrichtung 200 ist axial entlang der optischen Achse 102 zwischen der Fronthalterung 120 und dem Kühlelement 180 angeordnet. Die Infrarot-Baugruppe 140 liegt mittels der Infrarot-Platine 148 an dem Kühlelement 180 an. Das Kühlelement 180 umfasst eine Aufnahme 182 für die Infrarot-Baugruppe 140. Die Aufnahme 182 des Kühlelements 180 nimmt die Infrarot-Baugruppe 140 zumindest teilweise auf. Die Anordenvorrichtung 200 liegt zumindest teilweise und/oder zumindest abschnittsweise an dem Kühlelement 180 und der Fronthalterung 120 an. Zudem greift das Kühlelement 180 zumindest teilweise in die Anordenvorrichtung 200 ein. Die Infrarot-Baugruppe 140 und die visuelle Baugruppe 160 sind mittels der Anordenvorrichtung 200, insbesondere axial entlang der optischen Achse 102, überlappend zueinander angeordnet. Hier überlappen zumindest die Infrarot-Optik 146 und die Platine 166 für die visuelle Kamera 164. Die Infrarot-Baugruppe 140 und die visuelle Baugruppe 160 sind radial, insbesondere zur optischen Achse 102, beabstandet zueinander angeordnet. Die Anordenvorrichtung 200 umfasst eine Aufnahme 220 für die Infrarot-Baugruppe 140. Die Aufnahme 220 für die Infrarot-Baugruppe 140 umgreift die Infrarot-Baugruppe 140 zumindest teilweise, insbesondere im Wesentlichen vollständig. Die Aufnahme 220 der Anordenvorrichtung 200 für die Infrarot-Baugruppe 140 ist beispielhaft als eine viereckige Öffnung 222 ausgeformt, siehe auch Fig. 3 und 4. Die Aufnahme 220 der Anordenvorrichtung 200 für die Infrarot-Baugruppe 140 umgreift das Infrarot-Gehäuse 142 zumindest teilweise. Die Die Aufnahme 220 der Anordenvorrichtung 200 für die Infrarot-Baugruppe 140 ist hier beabstandet zu der Infrarot-Baugruppe, sodass es einen Abstand zwischen dem Infrarot-Gehäuse 142 und der Aufnahme 220 gibt. Die Anordenvorrichtung 200 umfasst eine Aufnahme 230 für die visuelle Baugruppe 160. Die Aufnahme 230 der Anordenvorrichtung 200 für die visuelle Baugruppe 160 umgreift die visuelle Baugruppe 160 zumindest teilweise und zumindest teilweise aufnehmen. Die visuelle Baugruppe 160 liegt nur teilweise an der Aufnahme 230 der Anordenvorrichtung 200 für die visuelle Baugruppe 160 an. Die Aufnahme 230 der Anordenvorrichtung 200 für die visuelle Baugruppe 160 umgreift die Platine 166 für die visuelle Kamera 164 zumindest teilweise. Die Aufnahme 220 der Anordenvorrichtung 200 für die Infrarot-Baugruppe 140 und die Aufnahme 230 der Anordenvorrichtung 200 für die visuelle Baugruppe 160 sind radial, insbesondere zur optischen Achse 102, versetzt zueinander an der Anordenvorrichtung 200 ausgeformt. Die Aufnahme 230 der Anordenvorrichtung 200 für die visuelle Baugruppe 160 ist beispielhaft schalenartig ausgeformt.

Die Anordenvorrichtung 200 umfasst ein Abschirmelement 240. Das Abschirmelement 240 ist dazu vorgesehen, Wärmestrahlung von der visuellen Baugruppe 160 gegenüber der Infrarot-Baugruppe 140 abzuschirmen. Beispielhaft bildet die Anordenvorrichtung 200 das Abschirmelement aus, sodass sie hier einstückig sind. Das Abschirmelement 240 erstreckt sich axial entlang der optischen Achse 102. Das Abschirmelement 240 erstreckt sich in Richtung zu der Fronthalterung 120. Das Abschirmelement 240 ist beispielhaft als ein Abschirmsteg 242 ausgeformt. Die Fronthalterung 120 umfasst ein Isolierelement 126. Das Isolierelement 126 ist dazu vorgesehen, die Infrarot-Baugruppe 140 zu isolieren. Die Fronthalterung 120 formt das Isolierelement 126 aus, sodass diese einstückig sind. Das Isolierelement 126 erstreckt sich axial entlang der optischen Achse 102 in Richtung zu der Infrarot-Baugruppe 140 und dem Kühlelement 180. Das Isolierelement 126 ist beispielhaft als ein Isoliersteg ausgeformt. Das Abschirmelement 240 liegt an dem Isolierelement 126 an. Die Anordenvorrichtung 200 umfasst zumindest ein Anordenelement 250. Das Anordenelement 250 ist dazu vorgesehen, die Fronthalterung 120 relativ zu der Infrarot-Baugruppe 140 und der visuellen Baugruppe 160 anzuordnen. Die Anordenvorrichtung 200 formt das Anordenelement 250 aus, sodass diese einstückig sind. Das Anordenelement 250 richtet die Fronthalterung 120 relativ zu der Infrarot-Baugruppe 140 und der visuellen Baugruppe 160 derart aus, dass die Öffnung 121 in der Fronthalterung 120 für die Infrarot-Baugruppe 140 und die Öffnung 122 in der Fronthalterung 120 für die visuelle Baugruppe 160 axial zu jeweils der Infrarot-Baugruppe 140 und der visuellen Baugruppe 160 ausgerichtet sind.

Das Anordenelement 250 ist beispielhaft nach Art eines Schraubdoms 252 ausgeformt, wobei hier vier Anordenelemente 250 vorgesehen sind. Das Anordenelement 250 greift in die Fronthalterung 120 ein. Die Fronthalterung 120 umfasst eine Aufnahme 130 für das Anordenelement 250. Die Aufnahme 130 für das Anordenelement 250 nimmt das Anordenelement 250 zumindest formschlüssig auf. Beispielhaft sind vier Aufnahmen 130 für jeweils eines der Anordenelemente 250 ausgebildet. Das Kühlelement 180 umfasst zumindest ein Ausrichtungselement 184. Die Anordenvorrichtung 200 umfasst zumindest eine Aufnahme 260 für das Ausrichtungselement 184. Das Ausrichtungselement 186 ist dazu vorgesehen, die Anordenvorrichtung 200 mittels der Aufnahme 260 für das Ausrichtungselement 186 relativ zu dem Kühlelement 180 auszurichten. Das Kühlelement 180 formt beispielhaft das Ausrichtungselement 184 aus, sodass diese einstückig sind. Das Ausrichtungselement 186 greift in die Aufnahme 260 der Anordenvorrichtung 200 für das Ausrichtelement 184 zumindest formschlüssig ein. Das Ausrichtungselement 184 ist beispielhaft als ein Ausrichtzapfen 186 ausgeformt. Hier sind beispielhaft zwei Ausrichtzapfen 186 und zwei Aufnahmen 260 ausgebildet, siehe auch Fig. 3 und 4. Die Aufnahme 260 ist jeweils als eine Durchgangsöffnung 262 ausgeformt.

Fig. 3 zeigt eine Explosionsansicht der Fronthalterung 120, der Anordenvorrichtung 200, des Kühlelements 180, der Infrarot-Baugruppe 140 und der visuellen Baugruppe 160. Die Fronthalterung 120 umfasst eine weitere Aufnahme 132. Die weitere Aufnahme 132 der Fronthalterung 120 umfasst ein Klebepad 134. Die weitere Aufnahme 132 der Fronthalterung 120 ist dazu vorgesehen, ein Infrarot-Fenster 152 für die Infrarot-Baugruppe 140 und eine Glasscheibe 170 für die visuelle Baugruppe 160 über das Klebepad 134 aufzunehmen. Eine Dichtung 136 ist auf die Fronthalterung 120 aufgeklebt, um das Gehäuse 110 gegenüber einer Arbeitsumgebung abzuschließen.

Fig. 4a zeigt eine perspektivische Frontansicht der Anordenvorrichtung 200, wobei Fig. 4b eine perspektivische Rückansicht der Anordenvorrichtung 200 darstellt.

## Patentansprüche

1. Wärmebildkamera (100) mit einem Gehäuse (110), mit einer Fronthalterung (120), mit einer Infrarot-Baugruppe (140) zur Detektion von Infrarotstrahlung, mit einer visuellen Baugruppe (160) zur Aufnahme von visueller Strahlung, wobei die Infrarot-Baugruppe (140) und die visuelle Baugruppe (160) im Wesentlichen innerhalb des Gehäuses (110) angeordnet sind, und mit zumindest einem Kühlelement (180) zumindest zur Kühlung der Infrarot-Baugruppe (140),
**gekennzeichnet durch**
eine Anordenvorrichtung (200), die dazu ausgebildet ist, die visuelle Baugruppe (160) zu der Infrarot-Baugruppe (140) anzuordnen.

2. Wärmebildkamera (100) nach Anspruch 1, **dadurch gekennzeichnet, dass** die Anordenvorrichtung (200) zwischen der Fronthalterung (120) und dem Kühlelement (180) angeordnet ist.

3. Wärmebildkamera (100) nach Anspruch 1 oder 2, **dadurch gekennzeichnet, dass** die Infrarot-Baugruppe (140) und die visuelle Baugruppe (160) mittels der Anordenvorrichtung (200) überlappend zueinander angeordnet sind.

4. Wärmebildkamera (100) nach einem der vorhergehenden Ansprüche, **dadurch gekennzeichnet, dass** die Anordenvorrichtung (200) zumindest eine Aufnahme (220) für die Infrarot-Baugruppe (140) aufweist, die die Infrarot-Baugruppe (140) zumindest teilweise umgreift.

5. Wärmebildkamera (100) nach einem der vorhergehenden Ansprüche, **dadurch gekennzeichnet, dass** die Anordenvorrichtung (200) eine Aufnahme (230) für die visuelle Baugruppe (160) aufweist, die die visuelle Baugruppe (160) zumindest teilweise umgreift.

6. Wärmebildkamera (100) nach einem der vorhergehenden Ansprüche, **dadurch gekennzeichnet, dass** die Anordenvorrichtung (200) zumindest ein Abschirmelement (240) aufweist, das dazu ausgebildet ist, Wärmestrahlung von der visuellen Baugruppe (160) gegenüber der Infrarot-Baugruppe (140) abzuschirmen.

7. Wärmebildkamera (100) nach einem der vorhergehenden Ansprüche, **dadurch gekennzeichnet, dass** die Fronthalterung (120) zumindest ein Isolierelement (126) aufweist, das dazu ausgebildet ist, die Infrarot-Baugruppe (140) zu isolieren.

8. Wärmebildkamera (100) nach den Ansprüchen 6 und 7, **dadurch gekennzeichnet, dass** das Abschirmelement (240) an dem Isolierelement (126) anliegt.

9. Wärmebildkamera (100) nach einem der vorhergehenden Ansprüche, **dadurch gekennzeichnet, dass** die Anordenvorrichtung (200) zumindest ein Anordenelement (250) aufweist, das dazu ausgebildet ist, die Fronthalterung (120) relativ zu der Infrarot-Baugruppe (140) und/oder der visuellen Baugruppe (160) anzuordnen.

10. Wärmebildkamera (100) nach einem der vorhergehenden Ansprüche, **dadurch gekennzeichnet, dass** das Kühlelement (180) zumindest ein Ausrichtungselement (184) aufweist und die Anordenvorrichtung (200) zumindest eine Aufnahme (260) für das Ausrichtungselement (184) umfasst, wobei das Ausrichtungselement (184) dazu ausgebildet ist, die Anordenvorrichtung (200) mittels der Aufnahme (260) für das Ausrichtungselement (184) relativ zu dem Kühlelement (180) auszurichten.
